# EUROPÄISCHE PATENTSCHRIFT

(11) **EP 0 650 049 B1**
(45) Veröffentlichungstag und Bekanntmachung des Hinweises auf die Patenterteilung: **18.06.1997**
(21) Anmeldenummer: 94890155.8
(22) Anmeldetag: 26.09.1994
(51) Int. Cl.: G01N 27/416, A61B 5/00, B01F 15/04, B01F 3/08

(54) **Verfahren und Vorrichtung zum Vermischen zweier Ausganslösungen**
Process and device for mixing two precursor solutions
Procédé et dispositif pour mélanger deux solutions de départ

(30) Priorität: 21.10.1993 AT 2131/93
(43) Veröffentlichungstag der Anmeldung: 26.04.1995
(73) Patentinhaber: AVL Medical Instruments AG, 8207 Schaffhausen (CH)
(72) Erfinder: Kroneis, Herbert, Dipl.-Ing. Dr., A-8052 Graz (AT); Noormofidi, Taghi, Dipl.-Ing., A-8054 Graz (AT); Steinböck, Wolf Dietrich, A-8020 Graz (AT); Huemer, Herfried, Dipl.-Ing., A-8047 Graz (AT)
(74) Vertreter: Krause, Walter, Dr. Dipl.-Ing.

(56) Entgegenhaltungen:
- EP-A- 0 313 546
- WO-A-93/05702
- AT-A- 392 364
- DE-A- 3 100 322
- DE-A- 3 527 281
- US-A- 4 163 734
- DATABASE WPI Week 8538, Derwent Publications Ltd., London, GB; AN 85-233258 & JP-A-60 151 560 (FUJI ELEC CORP R&D LTD)
- DATABASE WPI Week 8611, Derwent Publications Ltd., London, GB; AN 86-072353 & JP-A-61 022 246 (HITACHI KK, HITACHI KEISOKU ENG KK)

## Beschreibung

Die Erfindung betrifft ein Verfahren zum Vermischen zweier Ausgangslösungen zu einer Kalibrierlösung mit exakt bekanntem Wert für zumindest einen Kalibrierparameter, sowie eine Kalibriervorrichtung zur Durchführung des Verfahrens.

Üblicherweise werden zur Herstellung von genauen Flüssigkeitsgemischen teure Dilutorsysteme eingesetzt. Diese Systeme stellen exakt reproduzierbar die geforderten Mischverhältnisse her.

Aus der DE-A 31 00 322 ist es bekannt, Viskositätsunterschiede von Ausgangslösungen für die Herstellung eines optimierten Gemisches als Brennstoff für den Betrieb eines Motors zu nutzen. Dabei wird die gewünschte Zielviskosität des Gemisches in Abstimmung auf den verwendeten Motor festgelegt. Die beiden Ausgangslösungen werden in einem zweistufigen Prozeß unter Druck vermischt, wobei die Viskosität im homogenen Gemisch kontinuierlich gemessen und auf einen vorgegebenen Wert geregelt wird.

Nun ist es für verschiedene Anwendungsgebiete nicht unbedingt nötig, Gemische herzustellen, die exakt ein vorgegebenes Mischverhältnis aufweisen, sondern es ist manchmal ausreichend, das reale Mischungsverhältnis genau zu kennen. In all diesen Fällen wird mit teuren Mischsystemen oft ein unnötiger Aufwand betrieben.

Eine Verbesserung bekannter Systeme wird beispielsweise in der AT-B 392 364 dargelegt, welche ein Verfahren zum Kalibrieren eines Meßgerätes sowie eine Anordnung zur Durchführung des Verfahrens beschreibt. Zur Kalibrierung eines Meßgerätes, welches zumindest den pH- und den pCO₂-Wert in wäßrigen Lösungen bestimmt, wird hier vorgeschlagen, daß zwei lagerstabile, wäßrige Ausgangslösungen A und B unmittelbar vor der Kalibrierung in einem definierten Verhältnis vermischt werden und erst nach der chemischen Reaktion der Ausgangslösungen A und B die gewünschten pH- und pCO₂-Werte für die Kalibrierung der entsprechenden Meßelektroden des Meßgerätes zur Verfügung gestellt werden. Um das genaue Mischverhältnis zu bestimmen, wird hier vorgeschlagen, einer der Ausgangslösungen A und B einen Farbstoff zuzumischen, und das Mischverhältnis der Arbeitslösung mittels optischer Methoden, beispielsweise durch Absorptionsmessungen, zu kontrollieren. Weiters wird in diesem Dokument angeführt, daß es möglich ist, zumindest einer der Ausgangslösungen andere chemische oder physikalische Marker, beispielsweise Fluoreszenzlöscher oder radioaktiv markierte Stoffe, beizumischen.

Als nachteilig bei diesem Verfahren kann angeführt werden, daß einer der Ausgangslösungen bestimmte Substanzen zugemischt werden müssen, welche das Verfahren verkomplizieren, wobei die Arbeitslösung dann ebenfalls diese den Ausgangslösungen zugesetzten Stoffe enthält, welche bei der bestimmungsgemäßen Verwendung der Arbeitslösung störend sein können.

Aufgabe der Erfindung ist es, ein Mischverfahren der eingangs genannten Art derart weiterzubilden, daß es einfach gehandhabt werden kann und Störsubstanzen in der Kalibrierlösung weitgehend vermieden werden können.

Diese Aufgabe wird erfindungsgemäß dadurch gelöst, daß die Kalibrierlösung im ersten Schritt durch eine Grobvermischung der beiden Ausgangslösungen mit einem Mischverhältnis in einem vorgebbaren Bereich hergestellt wird, daß im zweiten Schritt der Wert eines vom Kalibrierparameter unabhängigen, internen Parameters der Kalibrierlösung bestimmt wird, wobei der interne Parameter eine inhärente Größe zumindest einer der Ausgangslösungen ist, dessen Wert in den beiden Ausgangslösungen bekannt und deutlich unterschiedlich ist, und daß im dritten Schritt aus dem gemessenen Wert des internen Parameters das exakte Mischverhältnis der Ausgangslösungen sowie der exakte Wert des Kalibrierparameters errechnet wird. Der Grundgedanke der vorliegenden Erfindung besteht somit darin, eine in den Ausgangslösungen bzw. zumindest in einer Ausgangslösung ohnedies verhandene inhärente Größe bzw. einen internen Parameter für die Bestimmung des Mischverhältnisses heranzuziehen. Auf teure Präzisionsmischeinrichtungen sowie die Zugabe von Markern kann durch das neue Verfahren verzichtet werden.

Das erfindungsgemäße Verfahren besteht im wesentlichen aus zwei Vorgängen: Aus dem groben Vermischen der Ausgangslösungen zur eigentlichen Kalibrierlösung und der exakten Messung des Mischverhältnisses mit Hilfe eines internen Parameters.

Besonders gute Ergebnisse können erzielt werden, wenn in einer Ausgestaltung der Erfindung der gemessene Wert des internen Parameters als Regel- oder Justiergröße für die Korrektur des Mischverhältnisses bei der Grobvermischung verwendet wird. Eine Regelung bzw. Nachjustierung des Mischverhältnisses kann somit über eine Rückkopplung des internen Parameters erfolgen.

In einer Weiterbildung der Erfindung ist vorgesehen, daß als Kalibrierparameter zumindest eine Größe aus der Gruppe pH-Wert und CO₂-Partialdruck der Kalibrierlösung verwendet wird.

Eine vorteilhafte Einsatzmöglichkeit des erfindungsgemäßen Verfahrens bei der Kalibration von ionenselektiven Elektroden ist dadurch gegeben, daß als Kalibrierparameter zumindest eine Ionenkonzentration der Kalibrierlösung, vorzugsweise die Konzentration der Na⁺, K⁺, Li⁺, Ca⁺⁺, Mg⁺⁺, Cl⁻ oder HCO₃⁻ Ionen, verwendet wird.

Weiters ist für die Kalibration von Biosensoren vorgesehen, daß als Kalibrierparameter zumindest eine Enzymsubstratkonzentration der Kalibrierlösung, vorzugsweise die Glucose-, Lactat-, Harnstoff- oder Creatininkonzentration, verwendet wird.

Erfindungsgemäß kann dabei als interner Parameter die Leitfähigkeit, der elektrische Widerstand, die optische Transmission, die optische Absorption oder die intrinsische Lumineszenz der Kalibrierlösung gemessen werden. Die Messung der Leitfähigkeit erfolgt hier erfindungsgemäß ohne spezielle Marker, d. h., den Lösungen muß keine leitfähige Zusatzsubstanz beigesetzt werden. Da beispielsweise alle organischen Puffersysteme eine intrinsische Lumineszenz zeigen, kann auch die Lumineszenz im Sinne der Erfindung gemessen werden.

Bei Ionen sowie bei CO₂ und pH ist der Zusammenhang zwischen der Leitfähigkeit und dem Kalibrierparameter trivial, da alle Ionen einen Beitrag zur Leitfähigkeit leisten. Bei Enzymsubstraten ist ein Zusammenhang mit der Leitfähigkeit z.B. dann gegeben, wenn die Kalibrierlösungen in gepuffertem pH-Milieu verwendet werden, und jedes pH-Puffersystem aufgrund der Dissoziationsgleichgewichte leitfähig ist.

Unter Verwendung der Leitfähigkeit als interner Parameter kann das vorliegende Verfahren somit auf alle Kalibrierlösungen angewandt werden, die ein pH-Puffersystem aufweisen. Die beiden Pufferkomponenten, Puffersäure und Pufferbase werden beispielsweise entsprechend der AT-B 392 364 in den beiden Ausgangslösungen getrennt eingesetzt.

Es ist auch möglich, die genannten Kalibrierparameter beliebig zu kombinieren, wie das beispielsweise für einen Analysator zur Messung von Blutgasen, Elektrolyten oder Enzymsubstraten oder deren Kombination wünschenswert ist.

Der interne Parameter muß über den gesamten Mischbereich inklusive den Grenzwerten der Ausgangslösungen meßbar sein, weiters muß der funktionelle Zusammenhang zwischen dem Meßwert des internen Parameters und dem Mischungsverhältnis der Kalibrierlösung bekannt sein.

Das beschriebene Verfahren eignet sich ausgezeichnet zur Integration in eine Kalibriervorrichtung für Analysatoren mit einer Meßkammer, wobei die Meßkammer eine Einrichtung zur Messung der Leitfähigkeit von mittels einer Pumpe in die Meßkammer eingebrachten Proben- und Kalibrierlösungen aufweist.

Erfindungsgemäß ist dabei vorgesehen, daß sie zwei Behälter mit unterschiedlichen Ausgangslösungen aufweist, wobei gesteuerte Ventile für die Grobvermischung der Ausgangslösungen zu einer in einem Kanal vorliegenden Kalibrierlösung vorgesehen sind, daß der Kanal mit der Einrichtung zur Messung der Leitfähigkeit verbindbar ist, sowie daß eine Auswerteeinrichtung vorgesehen ist, welche aus dem gemessenen Wert der Leitfähigkeit das exakte Mischverhältnis der Ausgangslösung sowie den exakten Wert zumindest eines Kalibrierparameters berechnet.

Eine derartige Kalibriereinrichtung kommt vorteilhaft in Anaysatoren zur Messung von Blutgasen, Elektrolyten und/oder Enzymsubstraten zur Anwendung.

Das Mischverfahren wird im folgenden anhand von Beispielen - unterstützt durch die Fig. 1 bis 4 - näher erläutert:
Fig. 1 zeigt die Realisierung eines Mischverfahrens mittels eines Einkanalpumpensystems,
Fig. 2 eine Mischvorrichtung mit einem Druckflaschensystem,
Fig. 3 die Realisierung des Mischverfahrens mit einem Mehrkanalpumpensystem und
Fig. 4 eine Mischvorrichtung für das Kalibrationssystem eines Blutgasanalysators.

Die im folgenden beschriebenen Verfahren zur Grobvermischung (Punkt A) und Verfahren zur Verhältnismessung (Punkt B) können grundsätzlich je nach Anforderungsprofil wahlweise zu einem Mischsystem zur Durchführung des erfindungsgemäßen Verfahrens kombiniert werden.

### A) Kostengünstige Methoden zur Grobvermischung von Ausgangslösungen.

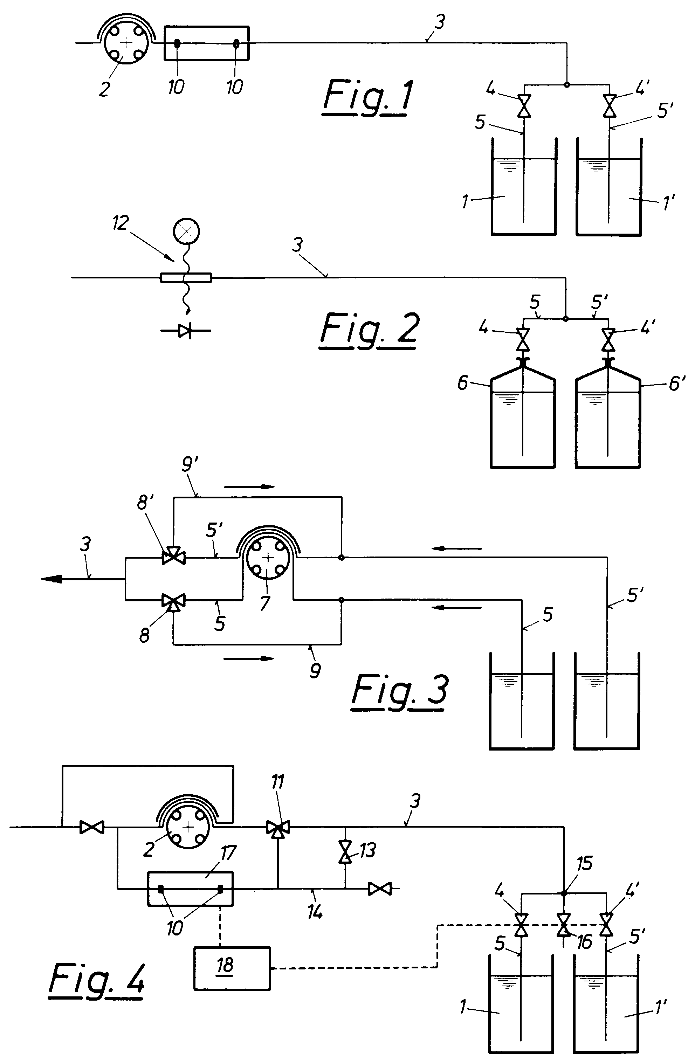

In Fig. 1 werden zwei Ausgangslösungen aus Behältern 1 und 1' durch abwechselndes Saugen mit einer einkanaligen Pumpe 2 in einen gemeinsamen Kanal 3 zu einer Kalibrierlösung vermischt, wo das entstandene Gemisch homogenisiert wird. Das Mischungsverhältnis wird über das Schalttaktverhältnis der Ventile 4, 4' in den Saugleitungen 5, 5' der Ausgangslösungen mit einer gewissen Toleranz vorgegeben.

In Fig. 2 werden Fraktionen der zwei Ausgangslösungen aus den Flaschen 6, 6' unter einem bestimmten Druck mit Hilfe der Ventile 4, 4' in einen gemeinsamen Kanal 3 dosiert. Das Mischungsverhältnis wird auch hier über das Schalttaktverhältnis der Ventile 4, 4' in gewissen Grenzen vorgegeben.

Bei der Ausführungsvariante nach Fig. 3 fördern die Pumpenkanäle einer Mehrkanalpumpe 7 in einem bestimmten Verhältnis zueinander die Ausgangslösungen aus den Behältern 1, 1'. Durch Zusammenführen der Leitungen 5, 5' nach der Pumpe 7 werden die geförderten Ausgangslösungen somit im Verhältnis der Kanalförderleistungen vermischt. Um für Kalibrationszwecke wahlweise eine der beiden Ausgangslösungen unvermischt in den Kanal 3 fördern zu können, sind Bypaßkanäle 9, 9' mit Ventilen 8, 8' vorgesehen.

### B) Methoden zur präzisen Bestimmung des Mischungsverhältnisses.

Allgemein ist zu sagen, daß die Bestimmung des Mischungsverhältnisses genauer sein muß als die erforderliche Genauigkeit der Mischung selbst. Weiters muß bei der Verhältnisbestimmung ein interner Parameter bewertet werden, in dem sich die beiden Ausgangslösungen deutlich voneinander unterscheiden. Dabei kann die Meßanordnung sowohl am Ort der Gemischanwendung als auch auf dem Weg zum Verbraucher der Kalibrierlösung installiert sein. Die Kalibration der Mischvorrichtung erfolgt durch Vermessung der reinen Ausgangslösung.

Fig. 1 zeigt die Verhältnisbestimmung mittels Leitfähigkeitsmessung bzw. Messung des elektrischen Widerstandes, welche bei Ausgangslösungen mit unerschiedlichen Werten für die Leitfähigkeit bzw. den elektrischen Widerstand eingesetzt werden kann. Zwischen dem Mischungsverhältnis und der Leitfähigkeit bzw. dem elektrischen Widerstand der Kalibrierlösung besteht ein mathematischer Zusammenhang (annähernd linear), es kann daher nach Messung der Leitfähigkeit oder des Widerstandes mit einer entsprechenden Einrichtung 10 exakt das reale Mischungsverhältnis berechnet werden.

Gemäß Fig. 2 kann auch die unterschiedliche optische Transmission bzw. Absorption der Ausgangslösungen mit einer schematisch dargestellten Licht/Empfängereinrichtung 12 zur Bestimmung des Mischungsverhältnisses verwendet werden. Dieses Verfahren eignet sich im Sinne der Erfindung (keine Zugabe von externen Markern) für von vornherein unterschiedlich gefärbte Ausgangs lösungen.

Fig. 4 zeigt eine vorteilhafte Anwendung des Verfahrens für das Kalibrationssystem eines hier nicht weiter dargestellten Analysators zur Messung von Blutgasen, Elektrolyten oder Enzymsubstanzen oder deren Kombination, wobei ein Einkanalpumpensystem 2 und eine Einrichtung 10 zur Messung der Leitfähigkeit (gemäß Fig. 1) kombiniert werden.

Für die Kalibration eines derartigen Analysators sind Lösungen nötig, die bestimmte Gaspartialdrücke aufweisen. Da solche Lösungen nicht lagerstabil sind, werden sie erst kurz vor Anwendung durch Mischen zweier Ausgangslösungen hergestellt. Dabei ist es nicht notwendig, ein exaktes Mischverhältnis herzustellen, sondern es genügt, wenn die reale Vermischung und damit die Konzentrationen bzw. Partialdrücke der für die Kalibration benötigten Substanzen bekannt sind.

Für eine bestmögliche Integration in den Analysator wird dessen Pumpe als einkanalige Pumpe 2 über ein Ventil 11 an den Kanal 3 des Vermischungssystems angeschlossen. Das nach dem Mischen im Kanal 3 befindliche Gemisch wird über einen mittels Ventil 13 schaltbaren Anschluß 14 entnommen. Die Zusammenführung der Ausgangslösungen nach den getakteten Ventilen 4, 4' erfolgt in einem Kreuzstück 15. Eine allfällige Belüftung des Kanales 3 erfolgt mittels Ventil 16.

Für die Messung des exakten Mischverhältnisses in einer Auswerteeinrichtung 18 drängt sich bei einer derartigen Integration der Vorrichtung in einen automatischen Analysator aus folgenden Gründen die Leitfähigkeitsmessung auf:
- In der Meßkammer 17 installierte Kontakte für die Leitfähigkeitsmessung können auch für die Führung und Positionierung von Proben verwendet werden.
- Die Vermessung der Kalibrierlösung erfolgt in einer aus mehreren Gründen thermostatisierten Meßkammer 17.
- Die beiden Ausgangslösungen weisen beim beschriebenen Analysator schon ohne spezielle Auslegung stark unterschiedliche Werte für die Leitfähigkeit auf.

Vorteilhafterweise kann daher die exakte Messung des Mischverhältnisses am Ort der Anwendung der Kalibrierlösung in der Meßkammer erfolgen.

Ein automatischer Analysator, der das erfindungsgemäße Verfahren anwendet, benötigt somit nur folgende zusätzliche Elemente: Die Mischventile 4, 4', die zwei Ventile 11 und 13 zum Anschluß der Vorrichtung an den Blutgasanalysator und eventuell ein Belüftungsventil 16. Folgende Elemente werden für den Betrieb des Analysators gebraucht und finden in der Vorrichtung zur Vermischung der Ausgangslösungen nur eine weitere Anwendung: Die Pumpe 2 sowie die in der Probenkammer 17 angeordnete Einrichtung 10 zur Messung der Leitfähigkeit.

Ein weiterer Vorteil des beschriebenen Kalibrierverfahrens ist die Realisierung beliebig vieler Kalibrationspunkte und Kalibrationsbereiche unter Verwendung ein und derselben Ausgangslösungen.

Die Kalibration klinischer Analysenautomaten ist üblicherweise auf physiologische Normal- oder Erwartungswerte abgestimmt. Mit dem beschriebenen Verfahren lassen sich jedoch leicht zusätzliche Kalibrationspunkte außerhalb der Normalbereiche festlegen. So ist beispielsweise für extrem pathologische Probenwerte ein zusätzlicher Kalibrationspunkt im entsprechenden Bereich vorteilhaft für die Richtigkeit der Analysenaussage.

Weiters eignen sich manche Analysenautomaten für die Messung derselben Parameter in verschiedenen Körperflüssigkeiten mit teilweise völlig unterschiedlichen Normalbereichen dieser Parameter. Ein Beispiel dafür ist die Elektrolytanalyse mit ionenselektiven Elektroden in Vollblut, Serum oder Plasma einerseits und in Urin andererseits. Die Erwartungswerte für Na⁺, K⁺ und Cl⁻ weisen in Urinproben völlig andere Normalbereiche auf, als in den drei anderen genannten Probenarten. Auch hier können mit dem beschriebenen Verfahren ohne Wechsel der Ausgangslösungen problemlos Kalibrierwerte in Abstimmung auf den jeweiligen Probennormalbereich verwirklicht werden.

## Patentansprüche

1. Verfahren zum Vermischen zweier Ausgangslösungen zu einer Kalibrierlösung mit exakt bekanntem Wert für zumindest einen Kalibrierparameter, **dadurch gekennzeichnet,** daß die Kalibrierlösung im ersten Schritt durch eine Grobvermischung der beiden Ausgangslösungen mit einem Mischverhältnis in einem vorgebbaren Bereich hergestellt wird, daß im zweiten Schritt der Wert eines vom Kalibrierparameter unabhängigen, internen Parameters der Kalibrierlösung bestimmt wird, wobei der interne Parameter eine inhärente Größe zumindest einer der Ausgangslösungen ist, dessen Wert in den beiden Ausgangslösungen bekannt und deutlich unterschiedlich ist, und daß im dritten Schritt aus dem gemessenen Wert des internen Parameters das exakte Mischverhältnis der Ausgangslösungen sowie der exakte Wert des Kalibrierparameters errechnet wird.

2. Verfahren nach Anspruch 1, **dadurch gekennzeichnet,** daß der gemessene Wert des internen Parameters als Regel- oder Justiergröße für die Korrektur des Mischverhältnisses bei der Grobvermischung verwendet wird.

3. Verfahren nach Anspruch 1 oder 2, **dadurch gekennzeichnet,** daß als Kalibrierparameter zumindest eine Größe aus der Gruppe pH-Wert und CO₂-Partialdruck der Kalibrierlösung verwendet wird.

4. Verfahren nach einem der Ansprüche 1 bis 3, **dadurch gekennzeichnet,** daß als Kalibrierparameter zumindest eine Ionenkonzentration der Kalibrierlösung, vorzugsweise die Konzentration der Na⁺, K⁺, Li⁺, Ca⁺⁺, Mg⁺⁺, Cl⁻ oder HCO₃⁻ Ionen, verwendet wird.

5. Verfahren nach einem der Ansprüche 1 bis 4, **dadurch gekennzeichnet,** daß als Kalibrierparameter zumindest eine Enzymsubstratkonzentration der Kalibrierlösung, vorzugsweise die Glucose-, Lactat-, Harnstoff- oder Creatininkonzentration, verwendet wird.

6. Verfahren nach einem der Ansprüche 1 bis 5, **dadurch gekennzeichnet,** daß als interner Parameter die Leitfähigkeit oder der elektrische Widerstand der Kalibrierlösung gemessen wird.

7. Verfahren nach einem der Ansprüche 1 bis 5, **dadurch gekennzeichnet,** daß als interner Parameter die optische Transmission, die optische Absorption oder die intrinsische Lumineszenz der Kalibrierlösung gemessen wird.

8. Kalibriervorrichtung für Analysatoren mit einer Meßkammer, wobei die Meßkammer eine Einrichtung (10) zur Messung der Leitfähigkeit von mittels einer Pumpe in die Meßkammer eingebrachten Proben- und Kalibrierlösungen aufweist, **dadurch gekennzeichnet,** daß sie zwei Behälter (1, 1'), mit unterschiedlichen Ausgangslösungen aufweist, wobei gesteuerte Ventile (4, 4') für die Grobvermischung der Ausgangslösungen zu einer in einem Kanal (3) vorliegenden Kalibrierlösung vorgesehen sind, daß der Kanal (3) mit der Einrichtung (10) zur Messung der Leitfähigkeit verbindbar ist, sowie daß eine Auswerteeinrichtung (18) vorgesehen ist, welche aus dem gemessenen Wert der Leitfähigkeit das exakte Mischverhältnis der Ausgangslösung sowie den exakten Wert zumindest eines Kalibrierparameters berechnet.

9. Verwendung der Kalibriereinrichtung nach Anspruch 8 in Analysatoren zur Messung von Blutgasen, Elektrolyten und/oder Enzymsubstraten.

## Claims

1. A method for mixing two initial solutions to produce a calibrating solution with an accurately known value for at least one calibrating parameter, **characterized in that** the calibrating solution is produced by coarsely mixing the two initial solutions in a first step, the mixing ratio being within a predetermined range, and that the value of an internal parameter of the calibrating solution, which is independent of the calibrating parameter, is determined in a second step, the internal parameter being an inherent quantity of at least one of the initial solutions, whose value is known and differs significantly for the two initial solutions, and further that the exact mixing ratio of the initial solutions and the exact value of the calibrating parameter are determined from the value measured for the internal parameter in a third step.

2. A method as in claim 1, **characterized in that** the value measured for the internal parameter is employed as a controlling or adjusting variable for correcting the mixing ratio during coarse mixing.

3. A method as in claims 1 or 2, **characterized in that** at least one variable from the group of pH value and CO₂ partial pressure of the calibrating solution is used as calibrating parameter.

4. A method as in any of claims 1 to 3, **characterized in that** at least one ionic concentration of the calibrating solution is employed as calibrating parameter, i.e., preferably the concentration of Na⁺, K⁺, Li⁺, Ca⁺⁺, Mg⁺⁺, Cl⁻ or HCO₃⁻ ions.

5. A method as in any of claims 1 to 4, **characterized in that** at least one enzyme substrate concentration of the calibrating solution is employed as calibrating parameter, i.e., preferably the concentration of glucose, lactate, urea, or creatinine.

6. A method as in any of claims 1 to 5, **characterized in that** the conductivity or electrical resistance of the calibrating solution is measured as internal parameter.

7. A method as in any of claims 1 to 5, **characterized in that** the optical transmission, optical absorption, or intrinsic luminescence of the calibrating solution is measured as internal parameter.

8. A calibrating system for analyzers with a measuring chamber, which measuring chamber is provided with a device (10) for measuring the conductivity of sample and calibrating solutions delivered into the measuring chamber by means of a pump, **characterized in that** the calibrating system comprises two containers (1, 1') with different initial solutions, controlled valves (4, 4') being provided for coarse mixing of the initial solutions to produce a calibrating solution in a passage (3), and that the passage (3) can be connected to the device (10) for conductivity measurement, and further that an evaluation unit (18) is provided for calculation of the exact mixing ratio of the initial solutions and of the exact value of at least one calibrating parameter from the value measured for conductivity.

9. Use of the calibrating system of claim 8 in analyzers for the measurement of blood gases, electrolytes and/or enzyme substrates.

## Revendications

1. Procédé destiné à mélanger deux solutions initiales en une solution de calibrage présentant une valeur exactement connue pour au moins un paramètre de calibrage, caractérisé en ce que dans une première étape, la solution de calibrage est fabriquée par mélange grossier des deux solutions initiales avec une proportion de mélange se situant dans une plage pouvant être prédéterminée, en ce que dans la seconde étape on détermine la valeur d'un paramètre interne de la solution de calibrage, indépendant du paramètre de calibrage, le paramètre interne étant une grandeur inhérente de l'une au moins des solutions initiales, dont la valeur est connue dans les deux solutions et nettement distincte pour chacune d'entre-elles, et en ce que dans la troisième étape, on calcule à partir de la valeur mesurée du paramètre interne, la proportion exacte de mélange des solutions initiales, ainsi que la valeur exacte du paramètre de calibrage.

2. Procédé selon la revendication 1, caractérisé en ce que la valeur mesurée du paramètre interne, est utilisée en guise de grandeur de réglage ou d'ajustement pour la correction de la proportion de mélange.

3. Procédé selon la revendication 1 ou 2, caractérisé en ce que l'on utilise en guise de paramètre de calibrage, au moins une grandeur du groupe valeur du pH ou pression partielle de CO₂ de la solution de calibrage.

4. Procédé selon l'une des revendications 1 à 3, caractérisé en ce que l'on utilise en guise de paramètre de calibrage, au moins une concentration en ions de la solution de calibrage, de préférence la concentration en ions Na⁺, K⁺, Li⁺, Ca⁺⁺, Mg⁺⁺, Cl⁻ ou HCO₃⁻.

5. Procédé selon l'une des revendications 1 à 4, caractérisé en ce que l'on utilise en guise de paramètre de calibrage, au moins une concentration de substrat d'enzyme de la solution de calibrage, de préférence la concentration en glucose, en lactate, en urée ou en créatinine.

6. Procédé selon l'une des revendications 1 à 5, caractérisé en ce qu'en guise de paramètre interne, on mesure la conductibilité ou la résistance électrique de la solution de calibrage.

7. Procédé selon l'une des revendications 1 à 5, caractérisé en ce qu'en guise de paramètre interne, on mesure la transmission optique, l'absorption optique ou la luminescence intrinsèque de la solution de calibrage.

8. Dispositif de calibrage pour des analyseurs comprenant une chambre de mesure, la chambre de mesure présentant un dispositif (10) pour mesurer la conductibilité de solutions-échantillon et de solutions de calibrage ayant été introduites dans la chambre de mesure au moyen d'une pompe, caractérisé en ce qu'il comprend deux récipients (1, 1') de solutions initiales différentes, des soupapes commandées (4, 4') étant prévues pour le mélange grossier des solutions initiales en une solution de calibrage présente dans un canal (3), en ce que le canal (3) peut être relié au dispositif (10) destiné à mesurer la conductibilité, et en ce qu'il est prévu un dispositif de traitement des données (18), qui calcule, à partir de la valeur mesurée de la conductibilité, la proportion de mélange exacte de la solution initiale, ainsi que la valeur exacte d'au moins un paramètre de calibrage.

9. Utilisation du dispositif de calibrage selon la revendication 8, dans des analyseurs destinés à mesurer des gaz du sang, des électrolytes et/ou des substrats d'enzyme.
